# EUROPEAN PATENT APPLICATION

(11) **EP 2 477 265 A1**
(43) Date of publication of application: **18.07.2012**
(21) Application number: 10815222.4
(22) Date of filing: 22.07.2010
(51) Int. Cl.: H01M 8/02, H01M 8/04, H01M 8/06, H01M 8/12

(54) **FUEL CELL**

(30) Priority: 09.09.2009 JP 2009207909
(71) Applicant: Konica Minolta Holdings, Inc., Tokyo 100-0005 (JP)
(72) Inventor: OKANO Takayuki, Hino-shi Tokyo 191-8511 (JP)
(74) Representative: HOFFMANN EITLE
(86) International application number: PCT/JP2010/062327
(87) International publication number: WO 2011/030625

(57) **Abstract**

Disclosed is a small-sized low-cost fuel cell having high fuel efficiency, wherein a solid oxide electrolyte membrane is interposed between a fuel electrode and an oxidant electrode. The fuel cell comprises a fuel production member which produces a fuel by a chemical reaction with water that is generated at the fuel electrode. A discharge surface of the fuel production member, from which the fuel is discharged and a supply surface of the fuel electrode, to which the fuel is supplied, are arranged in parallel so as to face each other. The discharge surface discharges the fuel in the form of a plane.

## Description

### TECHNICAL FIELD

The present invention relates to a fuel cell, in particular, to a fuel cell apparatus which includes a fuel generating member.

### BACKGROUND ART

In recent years, fuel cells which generate electric power from hydrogen and oxygen in air are developed actively.
Fuel cells have the following features. That is, since excretion products at the time of generation of electricity are only water, the fuel cells provide a power generation method excellent in environment preservation. Since efficiency in generating electric power theoretically is high, the fuel cells can save energy. Further, since heat generated at the time of generation of electricity can be recovered, the fuel cells provide reuse of heat energy. Accordingly, the fuel cells are expected as a powerful card for solving energy and environment problems on a global basis.

In such a fuel cell, a solid polyelectrolyte membrane which employs a solid polymer ion exchange membrane, a solid oxide electrolyte membrane which employs yttria-stabilized zirconia (YSZ), or the like is sandwiched between a fuel electrode and an oxidant electrode, whereby one cell is structured. Further, in the cell, a hydrogen flow passage to supply hydrogen as fuel gas to the fuel electrode and an air flow passage to supply an oxidant gas such as air to the oxidant electrode are disposed. When hydrogen and air are supplied respectively through these flow passages to the fuel electrode and the oxidant electrode, electricity is generated by electrochemical reaction (for example, refer to Patent Document 1).

However, in the structure disclosed in Patent document 1, the hydrogen flow passage is formed along the surface of the fuel electrode. Accordingly, when hydrogen is supplied to the hydrogen flow passage, the hydrogen is consumed in the fuel electrode while proceeding in the hydrogen flow passage. Consequently, the concentration of hydrogen becomes different between the upstream side and the downstream side in the hydrogen flow passage. As a result, electromotive forces generated in the fuel electrode become different depending on locations of this fuel electrode. Then, since the electromotive force generated by the entire body of the fuel electrode is influenced by a portion of the fuel electrode with a lower electromotive force, the electromotive force decreases. That is, there exist problems that the output of the fuel cell is reduced and the fuel efficiency is lowered.

Further, Patent Document 2 discloses to supply hydrogen gas to a hydrogen flow passage equipped with a nickel felt, to recycle unreacted hydrogen gas not used for a cell reaction, and to supply the recycled hydrogen gas to a fuel electrode. However, also in the structure disclosed by Patent Document 2, since hydrogen gas is supplied along the hydrogen flow passage, the efficiency of the output of a fuel cell is not improved.

Furthermore, Patent Document 3 discloses a fuel cell system in which steam generated from an air electrode of a solid polymer electrolyte fuel cell is supplied to a hydrogen producing mechanism arranged at a fuel electrode side, and hydrogen produced by this hydrogen producing mechanism is supplied to a fuel electrode. However, also in this system, since the steam is supplied in on direction, production of hydrogen by the hydrogen producing mechanism becomes different between the upstream side and downstream side of the steam. Therefore, also in the structure disclosed by Patent Document 3, it is difficult to improve the efficiency of the output of a fuel cell.

On the other hand, Patent Document 4 discloses a fuel cell system which includes a solid oxide fuel cell and a hydrogen-containing fuel which generates hydrogen gas by reacting with water. In this system, hydrogen gas is generated from the hydrogen-containing fuel by utilizing water generated in the fuel electrode side, and this hydrogen gas is supplied to the fuel electrode of a fuel cell through conduit or opening.

### RELATED ART DOCUMENT

### PATENT DOCUMENTS

Patent document No. 1: Japanese Unexamined Patent Publication No. H05-36417 official report
Patent Document No. 2: Japanese Unexamined Patent Publication No. H06-60888 official report
Patent Document No. 3: Japanese Unexamined Patent Publication No. 2009-99491 official report
Patent Document No. 4: Japanese Translation of PCT International Application Publication NO. JP-T-2006-503414 official report

### SUMMARY OF INVENTION

### PROBLEMS TO BE SOLVED BY THE INVENTION

However, Patent Document 4 discloses nothing about how to arrange concretely the hydrogen-containing fuel and the fuel electrode in order to attain improvement in efficiency of the output of a fuel cell.

The present invention was achieved in view of the above-mentioned problems, and an object is to provide a fuel cell with high fuel efficiency with a simple structure.

### MEANS FOR SOLVING THE PROBLEMS

The above-mentioned object is attained by the invention described in any one of following items 1 to 8.

1. A fuel cell in which a solid oxide electrolyte membrane is sandwiched between a fuel electrode and an oxidant electrode, comprises:
a fuel generating member which generates fuel by a chemical reaction with water produced in the fuel electrode,
wherein an emission surface of the fuel generating member which emits fuel, and a supply surface of the fuel electrode to which the fuel is supplied, are disposed to face each other, and arranged to be parallel to each other, and the emission surface emits the fuel in a planar form.

2. The fuel cell described in the item 1, is characterized in that the emission surface and the supply surface are arranged to come in close contact with each other.

3. The fuel cell described in the item 1 or the item 2, is characterized in that the emission surface and the supply surface have the same size to each other.

4. The fuel cell described in any one of the item 1 to the item 3, is characterized in that the fuel generating member is composed of iron.

5. The fuel cell described in any one of the item 1 to the item 4, is characterized in that the fuel cell further comprises a heater disposed on a surface of the fuel generating member opposite to the emission surface.

6. The fuel cell described in any one of the item 1 to the item 5, is characterized in that the temperature of the entire body of the fuel generating member is made uniform.

7. The fuel cell described in any one of the item 1 to the item 4, is characterized in that the solid oxide electrolyte membrane is shaped in a tubular form, the oxidant electrode is disposed on an inner surface of the solid oxide electrolyte membrane, the fuel electrode is disposed on an external surface of the solid oxide electrolyte membrane, and a tubular structure composed of the solid oxide electrolyte membrane, the oxidant electrode, and the fuel electrode is disposed at an inner side of the fuel generating member.

8. The fuel cell described in the item 7, is characterized in that the structure is prepared to a plurality of structures and the plurality of structures is arranged at the inner side of the fuel generating member.

### EFFECTS OF THE INVENTION

According to the present invention, since fuel can be supplied with a uniform concentration over an entire surface of the supply surface of a fuel electrode, electromotive forces generated on the fuel electrode becomes constant without becoming different depending on locations on the fuel electrode. As a result, it becomes possible to suppress lowering of output due to dispersion of electromotive forces and to enhance the fuel efficiency.

### BRIEF DESCRIPTION OF THE DRAWINGS

Fig. 1 is a schematic diagram showing an outline structure of a fuel cell in Embodiment 1 according to the present invention.
Fig. 2 is a schematic diagram showing an outline structure of a fuel cell in Embodiment 2 according to the present invention.
Figs. 3A to 3F each is a cross-sectional schematic diagram showing an outline of a process of manufacturing the fuel cell in Embodiment 2 according to the present invention.
Fig. 4 is a schematic diagram showing an outline structure of a fuel cell in a modified embodiment of Embodiment 2 according to the present invention.

### EMBODIMENT FOR CARRYING OUT THE INVENTION

Hereafter, a fuel cell in an embodiment according to the present invention will be explained based on drawings. In this connection, the present invention is not restricted to this embodiment

### Embodiment 1

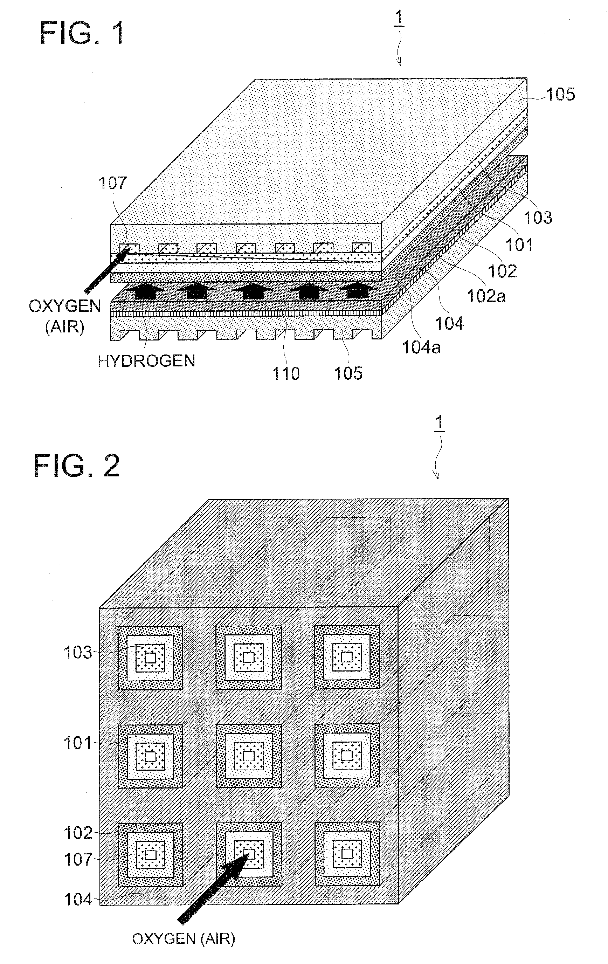

The structure of the fuel cell in Embodiment 1 will be explained with reference to Fig. 1. Fig. 1 is a schematic diagram showing an outline structure of the fuel cell 1 in Embodiment 1.

As shown in Fig. 1, the fuel cell 1 is composed of an electrolyte membrane 101, a fuel electrode 102, an oxidant electrode 103, a fuel generating member 104, a separator 105, a heater 110, and the like.

The fuel cell 1 has a MEA structure (Membrane Electrode Assembly) in which the fuel electrode 102 and the oxidant electrode 103 are joined separately onto both sides of the electrolyte membrane 101. As he fuel cell 1 of this embodiment, a solid oxide fuel cell (SOFC) is used.

At the fuel electrode 102 side, a fuel generating member 104 which is shaped in a flat plate expanding two-dimensionally and used to supply fuel to the fuel electrode 102, is provided so as to come in contact with the entire surface of a heater 110 disposed on a separator 105 located at one side of the fuel cell 1. At the oxidant electrode 103 side, oxidant passages 107 for supplying oxidant gas to the oxidant electrode 103 are formed in a separator 105 located at another side of the fuel cell 1.

In this embodiment, fuel is hydrogen, and oxidant gas is gas containing oxygen, for example, air.

In the fuel cell 1, hydrogen is supplied from the fuel generating member 104 to the fuel electrode 102, and oxygen is supplied from the oxidant passage 107 to the oxidant electrode 103, whereby an electrochemical reaction is caused so as to generate electricity.

As the material of the electrolyte membrane 101, for example, a solid oxide electrolyte employing stabilized yttria zirconium (YSZ) is used.

Examples of firm forming methods of the electrolyte membrane 101 include an electrochemical vapor deposition method (CVD-EVD method; Chemical Vapor Deposition-Electrochemical Vapor Deposition), a coating method, and the like.

As a method of forming the fuel electrode 102 and the oxidant electrode 103, for example, a vapor deposition method may be used.

In the fuel generating member 104, Fe and a Mg alloy which generate fuel by a chemical reaction, and carbon nanotubes which can adsorb or desorb fuel according to molecular structures may be employed. However, in this embodiment, Fe which is more preferable, is employed. Further, as the fuel generating member 104, not only members capable of generating fuel, but also members capable of absorbing and storing fuel by absorption may be employed. In this case, after generation of fuel from the fuel generating member 104, by conducting an absorbing and storing (absorption) work, the fuel generating member 104 can be used repeatedly. As a material capable of absorbing and storing hydrogen which is fuel, hydrogen absorption storage alloys which contain nickel, Fe, Pd, V, Mg, and the like as base materials may be employed.

The emission surface 104a of the fuel generating member 104 which emits fuel, and the supply surface 102a of the fuel electrode 102 to which the fuel is supplied, are disposed to face each other, and arranged to be parallel to each other with a predetermined distance between them by a space such as a bead which is not illustrated. In this regard, in this embodiment, in order to improve efficiency most, the size of the emission surface 104a is made to the same as that of the supply surface 102a.

With a heater 110 arranged so as to come in contact with the entire surface of the fuel generating member 104, if the temperature of the fuel generating member 104 is raised uniformly over the entirety, fuel is emitted in a planar form from the emission surface 104a. Thus, the fuel generating member 104 can emit fuel from the entire surface of its emission surface 104a toward the entire surface of the supply surface 102a of the fuel electrode 102.

In the case where iron (Fe) is employed as the fuel generating member 104, by the chemical reaction shown in a following formula (1), Fe changes into iron oxide (Fe3O4) due to a reaction with water (H₂O) produced by the fuel electrode by a chemical reaction shown in the following formula (1), thereby generating hydrogen.

4H₂O + 3Fe → 4H₂ + Fe₃O₄

Further, the fuel generation rate of the fuel generating member 104 is made approximately constant regardless of positions on the emission surface 104a. Specifically, a thermochemical balance is used. If the temperature of the fuel generating member 104 is raised or lowered, fuel corresponding to deviation from an equilibrium condition can be generated. Accordingly, if the temperature of the fuel generating member 104 is made uniform over the entirety by use of the heater 110, fuel can be generated with a constant rate regardless of locations.

Moreover, when a chemical equilibrium is used, if a fuel concentration in a space between the fuel electrode 102 and at the time of start-up of a cell is made constant regardless of locations, also, the fuel generating rate of the fuel generating member 104 can be made constant. Herein, if a fuel concentration at the time of start-up of a cell is made constant regardless of locations, power generated from the electrodes becomes constant. That is, the consumption of fuel becomes constant regardless of locations. In this case, if the chemical equilibrium deviates due to the consumed fuel, fuel is newly generated from the fuel generating member 104 in accordance with the amount of the deviation. Since the consumption of fuel is constant regardless of locations, the fuel generating rate from the fuel generating member 104 becomes constant regardless of locations.

In this regard, as the method for making the concentration of fuel at the time of start-up of a cell to be constant regardless of locations, for example, in the case where the fuel is gas or liquid, it is permissible to charge fuel in a space between the fuel electrode 102 and the fuel generating member 104 beforehand. In the case where the fuel is gas or liquid, diffusion occurs naturally, and the concentration in the charged space becomes constant. Accordingly, the concentration of fuel can be made constant regardless of locations.

In this way, the fuel cell 1 in the embodiment 1 according to the present invention is structured as described below. That is, the fuel generating member 104 which generates fuel is disposed at the inner side of the fuel cell 1. The emission surface 104a of the fuel generating member 104 which emits fuel, and the supply surface 102a of the fuel electrode 102 to which the fuel is supplied, are disposed to face each other, and arranged to be parallel to each other with a predetermined distance. Further, the emission surface 104a is configured to emit fuel from almost its entire surface toward the supply surface 102a of the fuel electrode 102. With this configuration, since fuel with a uniform concentration can be supplied over the entire surface of the supply surface 102a of the fuel electrode 102, electromotive forces generated on the fuel electrode 102 becomes constant without being different depending on locations on the fuel electrode 102. As a result, it becomes possible to suppress lowering of the output due to dispersion in electromotive force, and to enhance fuel efficiency.

Furthermore, the fuel generation rate of the fuel generating member 104 is made almost to be constant regardless of locations on the emission surface 104a, it becomes possible to suppress more lowering of the output due to dispersion in electromotive force, and to enhance more fuel efficiency.

In this embodiment, the emission surface 104a of the fuel generating member 104 which emits fuel, and the supply surface 102a of the fuel electrode 102 to which the fuel is supplied, are disposed to face each other, and arranged to be parallel to each other with a predetermined distance. However, the emission surface 104a and the supply surface 102a may be superimposed so as to be in close contact to each other. In this case, the fuel cell 1 may be miniaturized more with a simple structure.

### Embodiment 2

The structure of the fuel cell in Embodiment 2 will be explained with reference to Fig. 2. Fig. 2 is a schematic diagram showing an outline structure of the fuel cell 1 in Embodiment 2. In this connection, the respective members which structure the fuel cell I in Embodiment 2 are almost the same as those in the case of Embodiment 1.

As shown in Fig. 2, the fuel cell 1 is structured as described below. That is, a plurality of tubular META structures is disposed at the inner side of the fuel generating member 104. In each of the plurality of tubular MEA structures, an oxidant electrode 103 and a fuel electrode 102 are layered separately on the inner and outer surfaces of a tubular electrolyte membrane 101. An oxidizer passage 107 is formed in the core of the tubular oxidant electrode 103.

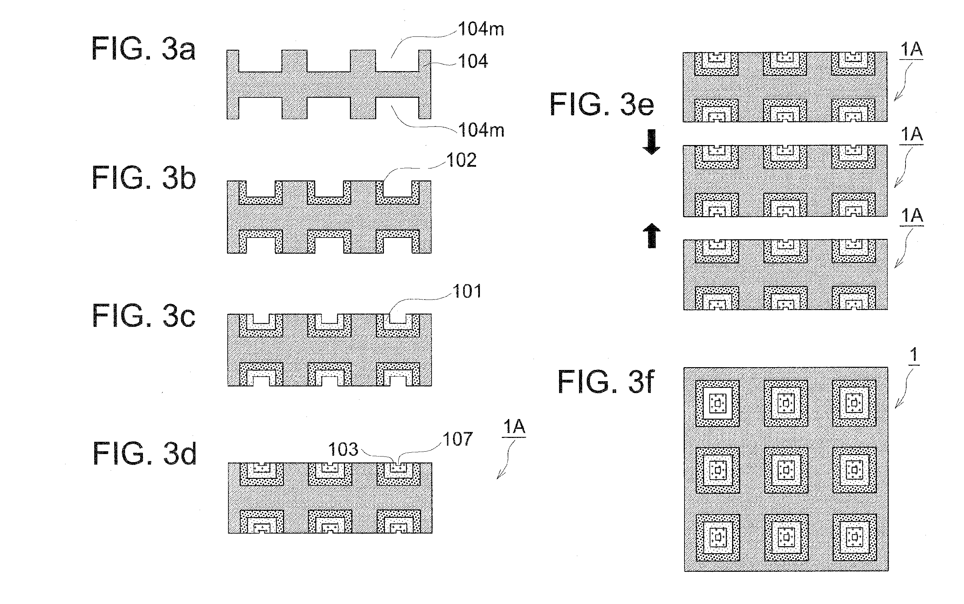

Fig. 3 shows an outline of a method for manufacturing the fuel cell 1 with such a structure.

First, a plurality of grooves 104m is formed respectively on both the upper and lower surfaces of the fuel generating member 104 (Fig. 3A).

Next, along the inner surface of each of the plurality of grooves 104m formed on the fuel generating member 104, a fuel electrode 102, an electrolyte membrane 101, and an oxidant electrode 103 are sequentially layered in this order, whereby a structure 1A is formed (Figs. 3B to 3D). Examples of the methods for forming the fuel electrode 102, the electrolyte membrane 101, and the oxidant electrode 103 include vapor deposition methods, spattering methods, screen printing methods, and the like.

Next, the structure 1A formed in the above ways is superimposed so as to form a plurality of structures 1A (Fig. 3E), whereby a fuel cell I equipped with a plurality of tubular MEA structures can be manufactured (Fig. 3F).

In the above configuration, an emission surface of the fuel generating member 104 which emits fuel can be easily brought in close contact with a supply surface of the fuel electrode 102 to which the fuel is supplied. In addition, oxidizer passages 107 can be formed at the same time. Accordingly, in addition to the effects in the case of Embodiment 1, there exists an effect to simplify the manufacturing process.

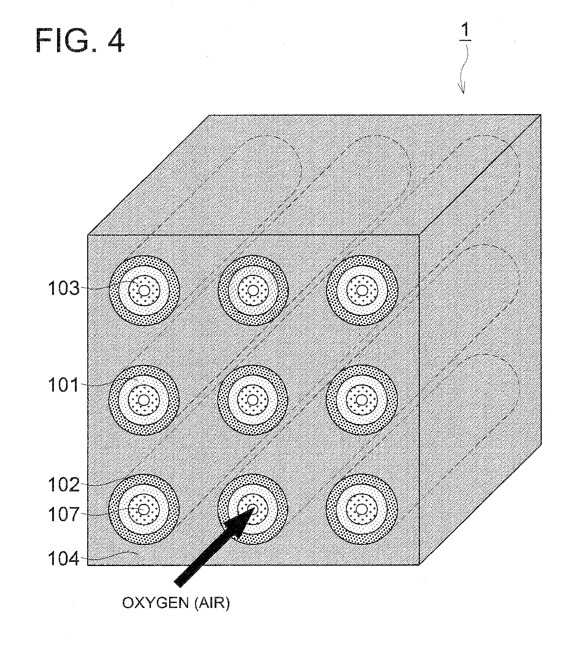

In this embodiment, the cross section of the MEA structure is shaped in a rectangular tubular form. However, the present invention is not limited to the above form. For example, as shown in Fig. 4, the cross section may be shaped in a cylindrical form. In this case, it is possible to obtain the same effect as that in Embodiment 2.

### EXPLANATION OF REFERENCE SYMBOLS

- 1: Fuel Cell
- 101: Electrolyte Membrane
- 102: Fuel Electrode
- 103: Oxidant Electrode
- 104: Fuel Generating Member
- 105: Separator
- 107: Oxidant Passage
- 110: Heater

## Claims

1. A fuel cell in which a solid oxide electrolyte membrane is sandwiched between a fuel electrode and an oxidant electrode, comprises:
a fuel generating member which generates fuel by a chemical reaction with water produced in the fuel electrode,
wherein an emission surface of the fuel generating member which emits fuel, and a supply surface of the fuel electrode to which the fuel is supplied, are disposed to face each other, and arranged to be parallel to each other, and the emission surface emits the fuel in a planar form.

2. The fuel cell described in claim 1, is **characterized in that** the emission surface and the supply surface are arranged to come in close contact with each other.

3. The fuel cell described in claim 1 or 2, is **characterized in that** the emission surface and the supply surface have the same size to each other.

4. The fuel cell described in any one of claims 1 to 3, is **characterized in that** the fuel generating member is composed of iron.

5. The fuel cell described in any one of claims 1 to 4, is **characterized in that** the fuel cell further comprises a heater disposed on a surface of the fuel generating member opposite to the emission surface.

6. The fuel cell described in any one of claims 1 to 5, is **characterized in that** the temperature of the entire body of the fuel generating member is made uniform.

7. The fuel cell described in any one of claims 1 to 4, is **characterized in that** the solid oxide electrolyte membrane is shaped in a tubular form, the oxidant electrode is disposed on an inner surface of the solid oxide electrolyte membrane, the fuel electrode is disposed on an external surface of the solid oxide electrolyte membrane, and a tubular structure composed of the solid oxide electrolyte membrane, the oxidant electrode, and the fuel electrode is disposed at an inner side of the fuel generating member.

8. The fuel cell described in claim 7, is **characterized in that** the structure is prepared to a plurality of structures and the plurality of structures is arranged at the inner side of the fuel generating member.
